(19) Europäisches Patentamt
European Patent Office
Office européen des brevets

(11) **EP 4 442 729 A1**

(12) **EUROPEAN PATENT APPLICATION**
published in accordance with Art. 153(4) EPC

(43) Date of publication:
**09.10.2024 Bulletin 2024/41**

(21) Application number: **21966347.3**

(22) Date of filing: **30.11.2021**

(51) International Patent Classification (IPC):
***C08G 63/00*** *(2006.01)*

(52) Cooperative Patent Classification (CPC):
**C08G 63/00**

(86) International application number:
**PCT/JP2021/043940**

(87) International publication number:
**WO 2023/100261 (08.06.2023 Gazette 2023/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Nisshinbo Holdings Inc.**
**Tokyo 103-8650 (JP)**

(72) Inventors:
• **HASHIBA Toshifumi**
**Chiba-city, Chiba 267-0056 (JP)**

• **HAYAKAWA Kazutoshi**
**Chiba-city, Chiba 267-0056 (JP)**
• **UEMURA Naohiro**
**Chiba-city, Chiba 267-0056 (JP)**
• **MATSUZAKA Erina**
**Chiba-city, Chiba 267-0056 (JP)**

(74) Representative: **Mewburn Ellis LLP**
**Aurora Building**
**Counterslip**
**Bristol BS1 6BX (GB)**

(54) **MARINE BIODEGRADABLE POLYOL, MARINE BIODEGRADABLE POLYMER COMPOUND, AND MARINE BIODEGRADABLE RESIN COMPOSITION**

(57)     Provided is a marine biodegradable polyol that is a compound which: includes at least two organic anions having a molecular weight of 100-5000; has a structure in which said organic anions are bonded by ionic bonds formed by a metal cation having a valence of two or higher; and includes at least two hydroxyl groups in each molecule.

EP 4 442 729 A1

**Description**

TECHNICAL FIELD

The present invention relates to a marine biodegradable polyol, a marine biodegradable polymer compound and a marine biodegradable resin composition.

BACKGROUND ART

Environmental contamination by microplastics (marine contamination) and the harmful effects of microplastics on ecosystems have become a problem in recent years, and so a variety of efforts to reduce their environmental impact are underway. Noteworthy among these efforts is the development and widespread adoption of biodegradable plastics.

Ordinary biodegradable plastics exhibit a high biodegradability in environments such as soils and sludge where there is an abundance of microorganisms to carry out decomposition. However, decomposition does not readily take place in environments such as the oceans where the concentration of microorganisms is extremely low (Non-Patent Document 1). Even with resins such as polycaprolactone (PCL) and polyhydroxyalkanoates (PHA) for which biodegradability in the oceans has been reported, the rate of decomposition has been found to differ widely depending on the type of seawater and is reportedly affected by a variety of factors, such as the presence/absence and cell count of plastic-degrading bacteria in seawater, and the salinity, pH, water temperature, dissolved oxygen concentration and dissolved organic carbon level of the water (Non-Patent Document 2).

Hence, there exists a desire for the development of materials which reliably decompose in any type of seawater, and materials which are capable of serving as degradation promoters for plastics that do not readily biodegrade in seawater.

PRIOR ART DOCUMENTS

NON-PATENT DOCUMENTS

Non-Patent Document 1: Takada, H.: "Current status of microplastics contamination --International trends and countermeasures," Haikibutsu Shigen Junkan Gakkaishi, Vol. 29, No. 4, pp. 261-269 (2018)
Non-Patent Document 2: Ebisui, A., et al.: "Decomposition of biodegradable plastics in seawater," Suisan Kogaku, Vol. 40, No. 2, pp. 143-149 (2003)

SUMMARY OF INVENTION

TECHNICAL PROBLEM

The present invention was arrived at in light of the above circumstances. The object of this invention is to provide a biodegradation promoter which promotes the decomposition of biodegradable plastics in the ocean, accelerating biodegradation.

SOLUTION TO PROBLEM

The inventors have conducted intensive investigations in order to achieve the above object. As a result, they have discovered that, regarding a marine biodegradable polyol obtained by bonding via ionic bonds two or more organic anions having at least one hydroxyl group and a molecular weight of from 100 to 5,000 with one or more metal cation having a valence of two or more, the polyol molecule is cleaved by ion exchange between the metal cation having a valence of two or more on the polyol and monovalent cations such as sodium and potassium within seawater, accelerating marine degradation.

The marine biodegradable polyol can be used as a linking agent. In polymers obtained using a polyol as a starting material, by substituting some of the polyol with this marine biodegradable polyol, cleavage sites where an ionic bond serves as a trigger can be introduced onto the polymer, enabling marine biodegradability to be imparted. By reacting and thus linking a single such polyol with a polyfunctional reactive compound, a marine biodegradable polymer compound can be obtained. The inventors have also found that by using this marine biodegradable polymer in combination with a plastic, especially a biodegradable plastic, this material is the first to incur primary decomposition in seawater and has (1) the effect of forming holes in the plastic material, increasing the specific surface area of the plastic and stimulating the growth of microorganisms which carry out decomposition, and (2) the effect of, owing to primary decomposition, accelerating secondary decomposition, i.e., biodegradation by microorganisms. As a result, the biodegradation of plastic materials in the ocean can be accelerated. This discovery ultimately led to the present invention.

Accordingly, this invention provides the following marine biodegradable polyol, marine biodegradable polymer compound and marine biodegradable resin composition.

1. A marine biodegradable polyol which is a compound having a structure that includes two or more organic anions of molecular weights of from 100 to 5,000, the organic anions being bonded via ionic bonds with a metal cation having a valence of two or more, and having on the molecule two or more hydroxyl groups.

2. The marine biodegradable polyol of 1 above, wherein the organic anions have repeating units containing at least one bond selected from the group consisting of ether, ester, amide and carbonate bonds.

3. The marine biodegradable polyol of 2 above, wherein the repeating units are ones which originate from a polyalkylene glycol, polyester, polycaprolactone, polycarbonate or polyamide.

4. The marine biodegradable polyol of 2 or 3 above, wherein the repeating units are ones which include at least one bond from ether and ester bonds.

5. The marine biodegradable polyol of any of 1 to 4 above, wherein the organic anions are ones which have an anionic substituent selected from the group consisting of the carboxylic acid anion ($-COO^-$), sulfonic acid anion ($-SO_3^-$), sulfuric acid anion ($-O-SO_3^-$) and phosphoric acid anion ($-P(=O)(OH)-O^-$).

6. The marine biodegradable polyol of any of 1 to 5 above, wherein the organic anions are ones which have a carboxylic acid anion.

7. The marine biodegradable polyol of any of 1 to 6 above, wherein the metal cation having a valence of two or more is a calcium ion, magnesium ion or aluminum ion.

8. The marine biodegradable polyol of any of 1 to 7 above which has one or more hydroxyl group at an end of a main chain.

9. The marine biodegradable polyol of any of 1 to 8 above which is a linear polymer compound.

10. The marine biodegradable polyol of any of 1 to 9 above, which does not include a cyclic structure on the molecule.

11. The marine biodegradable polyol of any of 1 to 10 above, wherein the molecular weight is from 500 to 10,000.

12. The marine biodegradable polyol of any of 1 to 11 above which has two or more metal cations with a valence of two or more per molecule.

13. The marine biodegradable polyol of any of 1 to 12 above which has a degree of degradation relative to cellulose that is 60% or more.

14. A linking agent which imparts marine biodegradability using the marine biodegradable polyol of any of 1 to 13 above.

15. A marine biodegradable polymer compound obtained by successive polymerization of the marine biodegradable polyol of any of 1 to 13 above and a compound having two or more reactive groups which react with hydroxyl groups.

16. The marine biodegradable polymer compound of 15 above which is a polyurethane or a polyester.

17. A marine biodegradable resin composition which includes the marine biodegradable polymer compound of 15 or 16 above and a resin.

18. The marine biodegradable resin composition of 17 above, wherein the resin is a biodegradable resin.

19. The marine biodegradable resin composition of 17 or 18 above, wherein the content of the marine biodegradable polymer is from 3 to 50 wt% and the content of the biodegradable resin is from 50 to 97 wt%.

20. A molded body obtained from the marine biodegradable resin composition of any of 17 to 19 above.

ADVANTAGEOUS EFFECTS OF INVENTION

The marine biodegradable polyol of the invention has marine biodegradability and, when used as a starting material together with other polyol starting materials, can impart marine biodegradability to polymer compounds. By carrying out successive polymerization with this polyol as a starting material, a marine biodegradable polymer compound can be obtained. Because the marine biodegradable polymer compound has marine biodegradability, the biodegradation in the ocean of compositions and molded bodies containing the compound is accelerated, making this compound useful as a measure for controlling marine pollution. Environmentally friendly compositions and molded bodies can be obtained by using a marine biodegradation promoter composed of the marine biodegradable polymer compound of the invention.

DESCRIPTION OF EMBODIMENTS

[Marine Biodegradable Polyol]

The marine biodegradable polyol of the invention is a compound having a structure that includes two or more organic anions of molecular weights of from 100 to 5,000, the organic anions being bonded via ionic bonds with a metal cation having a valence of two or more, and having on the molecule two or more hydroxyl groups.

The organic anions have a molecular weight of from 100 to 5,000. Taking into account cleavage in seawater and biodegradability, the molecular weight is preferably from 500 to 4,000, more preferably from 700 to 3,000, and most preferably from 900 to 2,500. At a molecular weight in excess of 5,000, biodegradation is difficult; a molecular weight below 100 is undesirable because the proportion of ions in the resin becomes high and there is a concern over a decline in the mechanical properties. In this invention, "molecular weight" refers to the absolute molecular weight measured by the static light-scattering method.

The organic anions preferably have repeating units which contain at least one bond selected from ether, ester, amide and carbonate bonds. From the standpoint of imparting marine biodegradable polymer compounds obtained using the marine biodegradable polyol of the invention with improved properties such as flexibility, strength, hydrophobicity, heat resistance and chemical resistance, the number of repeating units is more preferably 3 or more, even more preferably 4 or more, and most preferably 5 or more.

From the standpoint of both biodegradability and mechanical properties, the repeating units are preferably ones which originate from polyalkylene glycol, polyester, polycaprolactone, polycarbonate or polyamide, more preferably ones which originate from polyalkylene glycol, polyester or polycaprolactone, and even more preferably ones which originate from polyester or polycaprolactone.

The organic anions are preferably ones which have an anionic substituent selected from the group consisting of the carboxylic acid anion ($-COO^-$), the sulfonic acid anion ($-SO_3^-$), the sulfuric acid anion ($-O-SO_3^-$) and the phosphoric acid anion ($-P(=O)(OH)-O^-$). Of these, in terms of the environment and safety, ones which have $-COO^-$ are more preferred.

Examples of metal cations having a valence of two or more include ones from alkaline earth metals, earth metals and transition metals. From the standpoint of safety, the calcium ion, the magnesium ion and the aluminum ion are preferred; taking into account the environment in seawater, the calcium ion and the magnesium ion are more preferred; the calcium ion is most preferred.

The marine biodegradable polyol preferably has a hydroxyl group at the end of the main chain.

From the standpoint of biodegradability, the marine biodegradable polyol is preferably linear. However, in order to adjust the rate of biodegradation, the marine biodegradable polyol may be given a branched structure or a crosslinked structure by means of a suitable polyfunctional ingredient. For example, the heat resistance of the marine biodegradable polyol can be improved by admixing a suitable amount of a polyfunctional group having a glycerol skeleton, trimethylolpropane skeleton or the like and effecting ionic bonding via a metal cation having a valence of two or more. Examples of ingredients having specific polyfunctional skeletons include compounds in which one or more monovalent anionic substituent has been inserted through the subsequently described linkage onto a terminal hydroxyl group of a polyol compound such as glycerol, trimethylolpropane, Polypropylene Glycol Triol Type 300 or Triol Type 1500 (from Fujifilm Wako Pure Chemical Corporation, Ltd.), Kuraray Polyol F-1010 or F-510 (Kuraray Co., Ltd.), or Placcel 308 (Daicel Corporation).

From the standpoint of promoting biodegradability, it is preferable for the marine biodegradable polyol to not include a cyclic structure. However, to impart desired physical properties, a cyclic structure may be introduced within a range that does not adversely affect the biodegradability and regulation thereof.

The molecular weight of the marine biodegradable polyol is preferably from 500 to 10,000. Taking into account the handleability and mechanical properties, the molecular weight is more preferably from 1,000 to 5,000, and even more preferably from 2,000 to 4,000. At a molecular weight within this range, the handleability and mechanical properties are good. In cases where the marine biodegradable polyol is used as a chain extender in polyurethane or the like or as an aid that induces degradation (molecular cleavage) in seawater, the molecular weight is preferably from 500 to 3,000, and more preferably from 600 to 2,000. A molecular weight within this range is desirable from the standpoint of the reactivity and controlling the rate of biodegradation overall.

The specific structure of the marine biodegradable polyol is exemplified by a structure in which two or more monovalent organic anions having at least one hydroxyl group and one anionic substituent are bonded with one metal cation having a valence of two or more (also referred to below as "Polyol A"), and a structure in which a polyvalent organic anion having two or more anionic substituents is bonded with a metal cation having a valence of two or more and is capped at an end thereof, through a metal cation having a valence of two or more, with a monovalent organic anion having at least one hydroxyl group and one anionic substituent (also referred to below as "Polyol B"). In other words, Polyol B is a compound in which one or more repeating unit composed of a polyvalent organic anion having two more anionic substituents is included through a metal cation having a valence of two or more and is capped at an end with the monovalent organic anion through a metal cation having a valence of two or more. That is, Polyol A has only one metal cation per molecule, and Polyol B has two or more metal cations per molecule.

The larger the number of repeating units composed of the polyvalent organic anion, the stronger the ionic bonding properties and the better the marine biodegradability. On the other hand, because this gives rise to a decline in the mechanical properties, the marine biodegradable polyol is preferably, of Polyol A or Polyol B, one in which the number of repeating units composed of the polyvalent organic anion is from 1 to 10. Of Polyol A or Polyol B, one in which the number of repeating units composed of the polyvalent organic anion is from 1 to 5 is more preferred; one which is Polyol B and in which the number of repeating units composed of the polyvalent organic anion is from 1 to 4 is even more preferred.

The marine biodegradable polyol of the invention has a degree of degradation with respect to cellulose over an incubation period of 56 days (2 months) that is preferably 60% or more. At a degree of degradation relative to cellulose of 60% or more, it can be judged to be a material having inherent biodegradability at least in the ocean. The degree of degradation with respect to cellulose is more preferably 70% or more, and even more preferably 80% or more. The degree of degradation relative to cellulose can be measured, for example, in accordance with ASTM D6691 or by a biochemical oxygen demand (BOD)-based marine biodegradation test method modified with reference thereto.

[Method for Preparing Marine Biodegradable Polyol]

Polyol A can be obtained using as the starting material a salt compound composed of a monovalent cation and a monovalent organic anion having at least one hydroxyl group and one anionic substituent (which salt compound is also referred below as "Salt Compound A"). Polyol B can be obtained using as the starting materials Salt Compound A and a salt compound composed of a monovalent cation and a polyvalent organic anion having two or more monovalent anionic substituents (which salt compound is also referred below as "Salt Compound B").

Salt Compound A is exemplified by salt compounds with a structure in which the one monovalent anionic substituent has been introduced through a linking group onto a compound having two hydroxyl groups. Salt Compound B is exemplified by salt compounds with a structure in which the two or more monovalent anionic substituents have been introduced through linking groups onto a compound having two hydroxyl groups.

Examples of the compound having two or more hydroxyl groups include polyalkylene glycols, polycaprolactone polyols, polyester polyols and polycarbonate polyols. Commercial products may be used as these. Examples of such commercial products include Polypropylene Glycol Diol Type 1000, Diol Type 2000, Triol Type 300 and Triol Type 1500 (from Fujifilm Wako Pure Chemical Corporation, Ltd.), Placcel 210B, 220N and 308 (Daicel Corporation), and Kuraray Polyol P-1010, P-2010, P-2050, P-520, C-590 and F-1010 (Kuraray Co., Ltd.).

Examples of methods for introducing monovalent anionic substituents onto the compound having two or more hydroxyl groups include, in cases where -COO$^-$ is to be introduced, the method of subjecting a compound having the active functional group and a divalent carboxylic anhydride to an esterification reaction in the presence of a monovalent metal salt, and the method of reacting these with a monovalent metal to form a metal alkoxide, and then carrying out esterification using a dicarboxylic anhydride. Examples of the dicarboxylic anhydride include phthalic acid, trimellitic anhydride (this compound has one acid anhydride group and one carboxyl group), pyromellitic anhydride, 5-norbornene-endo-2,3-dicarbocylic anhydride, naphthalic anhydride, naphthalenetetracarboxylic dianhydride, maleic anhydride, succinic anhydride and chlorendic anhydride. Of these, succinic anhydride, maleic anhydride and phthalic anhydride are preferred. From the standpoint of biodegradability, succinic anhydride and maleic anhydride are more preferred. In cases where -SO3- is to be introduced, the method may be, for example, one which reacts a compound having a hydroxyl group or an amino group as the active functional group with $SO_3$ or a $SO_3 \cdot$ Lewis base complex in an aprotic polar solvent. A tertiary amine, pyridine, DMF or the like may be used as the Lewis base. Acetonitrile or the like is preferred as the aprotic polar solvent. These reactions may be carried out by known methods.

Specific methods for preparing the marine biodegradable polyol of the invention include methods (1) and (2) below.

(1) A method which includes the step of forming a water-in-oil (W/O) emulsion that contains Salt Compound A or Salt Compounds A and B in water droplets and the step of carrying out bonding treatment using a polyvalent metal salt (Method 1).

(2) A method which adds dropwise a powder or solution of a polyvalent metal salt to a medium that dissolves Salt Compound A or Salt Compounds A and B, causing settling out or precipitation to occur while carrying out bonding treatment, or a method which adds dropwise a solution of Salt Compound A or of Salt Compounds A and B to a powder of a polyvalent metal salt or a medium that dissolves the polyvalent metal salt, causing settling out or precipitation to occur while carrying out bonding treatment (Method 2).

(3) A method which hot-melts Polymer Compound A and adds a powder or solution of a polyvalent metal salt to the molten Polymer Compound A, thereby carrying out bonding treatment.

Method 1 includes the step of including Salt Compound A or Salt Compounds A and B in water droplets and the step of using a polyvalent metal salt to carry out ionic bonding treatment.

An example of a W/O emulsion forming method is described. First, a solution of one or more type of Salt Compound A or Salt Compounds A and B dissolved in water or a mixed solvent of water and a hydrophilic organic solvent is prepared. If necessary, heating may be carried out at this time. Next, the solution and a hydrophobic organic solvent are mixed together and the mixture is emulsified using an agitator, homogenizer or the like. At the time of mixture, the solution may be added to the hydrophobic organic solvent, or the hydrophobic organic solvent may be added to the solution. A surfactant or a polymeric stabilizer may be dissolved in the hydrophobic organic solvent and used at this time to control the particle size of the water droplets in the W/O emulsion.

Alternatively, as another example of a W/O emulsion forming method, one or more type of Salt Compound A or Salt Compounds A and B, a hydrophobizing agent, water, a surfactant, a hydrophobic organic solvent and other necessary ingredients may be charged all at once into a container and emulsified using an agitator, homogenizer or the like.

Heating may be carried out when forming the W/O emulsion. By heating, the solubility can be increased, enabling Salt Compound A or Salt Compounds A and B to be homogenized and enabling the W/O emulsion to be stabilized. The heating temperature is preferably between 15°C and 100°C, and more preferably between 40°C and 80°C.

After the W/O emulsion has been formed, ionic bonding treatment is carried out. Bonding treatment may be carried out by adding a polyvalent metal salt-containing solution to the W/O emulsion and stirring. Alternatively, the W/O emulsion may be added to a polyvalent metal salt-containing solution and stirring carried out.

Examples of the polyvalent metal salt include calcium salts, strontium salts, magnesium salts, barium salts, radium salts, lead salts, zinc salts, nickel salts, iron salts, copper salts, cadmium salts, cobalt salts, manganese salts, aluminum salts, gallium salts, indium salts and thallium salts. Calcium salts, magnesium salts and aluminum salts are preferred because they are metals which are present in seawater and also for environmental reasons and in terms of safety and flexibility. Taking the environment in seawater into account, calcium salts and magnesium salts are more preferred. Specific examples of such polyvalent metal salts include calcium chloride, calcium sulfate, calcium carbonate, calcium hydroxide, calcium oxide, magnesium chloride, magnesium sulfate, magnesium carbonate, magnesium hydroxide, magnesium oxide, aluminum sulfate and potassium aluminum sulfate (potassium alum). In terms of solubility in water, handleability, cost and the like, calcium chloride, magnesium chloride and aluminum sulfate are preferred.

The concentration of polyvalent metal salt within the polyvalent metal salt-containing solution is preferably from 1 to 40 wt%, and more preferably from 10 to 30 wt%. Water, lower alcohol-type solvents such as methanol, ethanol, 1-propanol and 2-propanol, and mixed solvents thereof are preferred as the solvent for this solution, although mixed solvents with other organic solvents are also acceptable so long as they can dissolve the salt to the target concentration without dissolving the particles.

Bonding treatment may be carried out while heating, if necessary. Heating may be carried out when adding the polyvalent metal salt-containing solution to the dispersion, may be carried out when stirring following such addition, or may be carried out at both of these times. The heating temperature is preferably between 10°C and 100°C, and more preferably between 40°C and 80°C. The treatment time is preferably from 0.5 to 24 hours, and more preferably from 1 to 12 hours. By heating, the solubility of the hydrophobizing agent can be increased.

After bonding treatment, if necessary, washing and drying of the particles may be carried out to obtain the marine biodegradable polyol. Washing may be carried out by an ordinary method such as that of, for example, removing the solvent following bonding treatment, adding water, and centrifugation. Drying may be carried out by an ordinary method such as spray drying, vacuum drying or freeze drying. If necessary, the size of the marine biodegradable polyol thus obtained may be adjusted by carrying out surface treatment or grinding treatment using known equipment.

Method 2 is a method which adds dropwise a powder or solution of a polyvalent metal salt to a medium that dissolves Salt Compound A or Salt Compounds A and B, causing settling out or precipitation to occur while carrying out bonding treatment, or a method which adds dropwise a solution of Salt Compound A or of Salt Compounds A and B to a powder of a polyvalent metal salt or a medium that dissolves the polyvalent metal salt, causing settling out or precipitation to occur while carrying out bonding treatment.

An example of Method 2 is described. First, Solution A is prepared by dissolving one or more type of Salt Compound A or Salt Compounds A and B in water or a mixed solvent of water and a hydrophilic organic solvent. If necessary, heating may be carried out at this time in order to increase the solubility. Next, solution B containing a polyvalent metal salt is added and stirring is carried out. Alternatively, a solution in which one or more type of Salt Compound A or Salt Compounds A and B has been dissolved may be added to and stirred with a polyvalent metal salt-containing solution. The polyvalent metal salt-containing solution used may be similar to that mentioned above in the description of Method 1.

If the polyvalent metal salt has a good reactivity and reacts even in a solid state, it may be used in powder form without employing a medium, or it may be used after dispersion in a small amount of medium.

In this way, bonding treatment can be carried out and the target Polyol A or B which has gradually become insoluble settles out or precipitates. The treatment time is preferably from 0.5 to 24 hours, and more preferably from 1 to 12 hours.

To control the particle size of the settled or precipitated matter, a surfactant or a polymeric stabilizer may be dissolved at this time in either or both of Solutions A and B.

Heating may be carried out when causing the target Polyol A or B to settle out or precipitate. Such heating may be carried out when mixing together Solution A and Solution B, may be carried out when stirring following such mixture, or may be carried out at both of these times. By heating, the solubility of Salt Compound A or Salt Compounds A and B can be increased, making it possible to create larger molecules and uniformize the molecular weight distribution due to bonding, and also making it possible to stabilize bonding. The heating temperature is preferably between 15°C and 100°C, and more preferably between 40°C and 80°C.

Following treatment, if necessary, washing and drying of the particles may be carried out to obtain a marine biodegradable polyol. Washing may be carried out by an ordinary method such as that of, for example, removing the solvent following bonding treatment, adding water, and centrifugation. Drying may be carried out by an ordinary method such as spray drying, vacuum drying or freeze drying. The particle size of the resulting marine biodegradable polyol may be adjusted by carrying out surface treatment or grinding treatment using known equipment.

Method 3 is a method which carries out bonding treatment by hot-melting Polymer Compound A and adding a powder or solution of a polyvalent metal salt to the molten Polymer Compound A.

An example of Method 3 is described. First, Polymer Compound A is heated and a Polymer Compound A melt is prepared. The temperature at which Polymer Compound A is heated is at or above the melting point and preferably at or above 100°C. Next, a powder of a polyvalent metal salt or a dispersion or solution of a polyvalent metal salt in a suitable solvent such as water or a lower alcohol is added to the Polymer Compound A melt under stirring. The polyvalent metal salt used may be one that is similar to those mentioned in the description of Method 1.

In this way, bonding treatment can be carried out, the viscosity of the melt gradually rises, and Polymer Compound B can be obtained in bulk. The treatment time is preferably from 0.5 to 24 hours, and more preferably from 1 to 12 hours.

Following treatment, if necessary, washing and drying of the particles may be carried out to obtain particles of the hydrophobizing compound. Washing may be carried out by an ordinary method such as that of, for example, removing the solvent following bonding treatment, adding water, and centrifugation. Drying may be carried out by an ordinary method such as spray drying, vacuum drying or freeze drying. The size of the hydrophobizing compound particles thus obtained may be adjusted by carrying out surface treatment or grinding treatment using known equipment.

When preparing Marine Biodegradable Polyol B, in order to adjust the physical properties, it is also possible to impart a partially crosslinked structure or the like by using, together with Salt Compound A or Salt Compounds A and B, a salt consisting of a monovalent cation and an anion having three or more monovalent anionic substituents. A polyvalent aliphatic carboxylic acid salt having a valence of three or more, such as an aconitic acid salt, or a polyvalent aromatic carboxylic acid salt, such as a mellitic acid salt, may be used as such a salt.

The marine biodegradable polyol may be used as a linking agent that imparts marine biodegradability. That is, marine biodegradability can be imparted to a compound obtained by reacting the marine biodegradable polyol with a compound having two or more reactive groups that react with hydroxyl groups. Alternatively, it may be used in admixture with other polyols in order to impart marine biodegradability to polymer compounds obtained using such other polyols. When used in admixture, it may be used in a ratio of from 10 to 90 wt% of all the polyol, although from the standpoint of the influence of its properties on polymer compositions containing the original polyols and the marine biodegradability, use in a ratio of from 10 to 50 wt% is preferred; use in a ratio of from 10 to 30 wt% is more preferred.

[Marine Biodegradable Polymer Compound]

The marine biodegradable polymer compound of the invention is a compound obtained by successive polymerization of the above marine biodegradable polyol and a compound having two or more reactive groups which react with hydroxyl groups. Examples of compounds having two or more reactive groups which react with hydroxyl groups include dicarboxylic acids and acid chlorides thereof, and diisocyanates.

Examples of the dicarboxylic acid include aromatic dicarboxylic acids such as terephthalic acid, 2,6-naphthalenedicarboxylic acid, diphenyldicarboxylic acid and isophthalic acid; and aliphatic carboxylic acids such as adipic acid and sebacic acid. These carboxylic acids may be used as is or, if necessary, acid chlorides or active esters derived therefrom for the purpose of increasing the reactivity may be used. Taking into account biodegradability within the environment, a dicarboxylic acid that does not include a cyclic structure is preferred.

The method for successive polymerization of the marine biodegradable polyol and a dicarboxylic acid is not particularly limited; reference can be made to known methods for the successive polymerization of polyesters. For example, reference can be made to the method described in Sen'i to Kogyo, Vol. 40, No. 4.5, pp. 259-261 (1984).

The reaction of the marine biodegradable polyol with a dicarboxylic acid may optionally use, for the purpose of accelerating the reaction, a polycondensation catalyst such as antimony trioxide, a germanium catalyst or a titanium catalyst; or a catalyst commonly used in transesterification, such as magnesium acetate or manganese acetate. Taking into account the burden on the environment, a catalyst which does not include a metal is preferred. The catalyst is used in an amount which is preferably from about 0.01 part by weight to about 5 parts by weight per 100 parts by weight of the marine biodegradable polyol.

Examples of the diisocyanate include aliphatic isocyanates such as hexamethylene diisocyanate (HDI), pentamethylene diisocyanate (PDI), isophorone diisocyanate (IPDI), cyclohexane-1,4-diisocyanate and methylene bis(4-cyclohexyl isocyanate), and aromatic isocyanates such as toluene diisocyanate (TDI), diphenylmethane-4,4-diisocyanate (MDI), xylene diisocyanate and 1,4-phenylene diisocyanate. Taking into account the biodegradability in the environment, an isocyanate which does not include a cyclic structure is preferred; the linear aliphatic isocyanates HDI and PDI are more preferred.

The method for successive polymerization of the marine biodegradable polyol and a diisocyanate is not particularly limited; reference can be made to known methods for the successive polymerization of polyurethanes. For example, reference can be made to Journal of Network Polymer, Vol. 39, No. 1, pp. 10-19 (2018).

The reaction of the marine biodegradable polyol with a diisocyanate may use, for the purpose of shortening the reaction time or lowering the reaction temperature owing to an increase in reactivity, an amine-based catalyst such as 1,4-diazabicyclo[2.2.2]-octane (DABCO), 1,8-diazabicyclo-[5.4.0]-undeca-7-en (DBU), N,N-dimethylcyclohexylamine (DMCA) or triethylamine; or a tin catalyst such as dibutyltin dilaurate, tetramethyltin, tetrabutyltin, tetraoctyltin, tributyltin chloride, dibutyltin dichloride, dimethyltin oxide, trimethyltin chloride, dimethyltin dichloride, trioctyltin chloride, dibutyltin oxide, dibutyltin diacetate, butyltin trichloride, dioctyltin dichloride, dioctyltin oxide, dioctyltin dilaurate or dioctyltin diacetate. Alternatively, zinc complexes, iron complexes, bismuth complexes and zirconium complexes analogous to these tin complexes are also useful as the catalyst. Taking into account the burden on the environment, a catalyst that does not include a metal is preferred. The catalyst is used in an amount which is preferably from about 0.01 part by weight to about 5 parts by weight per 100 parts by weight of the marine biodegradable polyol.

[Marine Biodegradable Resin Composition]

The marine biodegradable polymer compound of the invention can function as a marine biodegradation promoter. That is, by using the marine biodegradable polymer compound of the invention in combination with a resin, especially a biodegradable resin, a resin composition whose biodegradation in the ocean is accelerated can be obtained. It is also possible to use in combination multiple types of resins for the purpose of adjusting the properties and handleability of the resin composition. "Biodegradable resin" refers herein to a resin which decomposes under the action of microorganisms in the natural world, ultimately breaking down into inorganic matter such as water and carbon dioxide.

Examples of resins that can be combined with the marine biodegradation promoter of the invention include polyethylene, polyester, polypropylene, polyethylene terephthalate, vinyl chloride, polystyrene, polyurethane, epoxy resins, chlorinated polyethylene resins, chlorinated polypropylene resins, modified nylon resins, phenolic resins, silicone resins, polyvinyl acetate, ethylene-vinyl acetate copolymers, polyvinyl chloride, polyvinylidene chloride, styrene-maleic acid resins, styrene-butadiene resins, butadiene resins, acrylonitrile-butadiene resins, poly(meth)acrylonitrile resins, (meth)acrylamide resins, bio-PETs, biopolyamides, biopolycarbonates, biopolyurethanes, polyvinyl alcohol, polybutylene adipate/terephthalate, polyethylene terephthalate succinate, biopolybutylene succinate, poly(lactic acid) blends, starch-blended polyester resins, polybutylene terephthalate succinate, polylactic acid and polyhydroxyalkanoates. From the standpoint of reducing the burden on the environment, resins having a high biodegradability are especially preferred.

Examples of such biodegradable resins include resins the raw materials for which are from petroleum, such as polycaprolactone, poly(caprolactone/butylene succinate), polybutylene succinate (PBS), poly(butylene succinate/adipate) (PBSA), poly(butylene adipate/terephthalate) (PBAT), poly(butylene succinate/carbonate), polyethylene terephthalate copolymer, polyethylene terephthalate/succinate, poly(tetramethylene adipate/terephthalate), polyethylene succinate, polyvinyl alcohol, polyglycolic acid and glycolic acid/caprolactone copolymers; resins the raw materials for which are partly from biomass, such as (polylactic acid/polybutylene succinate-based) block copolymers, (polylactic acid/polycaprolactone) copolymers, (polylactic acid/polyether) copolymers, polylactic acid-blended PBAT, lactic acid/glycolic acid copolymers, biopolybutylene succinate, poly(butylene succinate/adipate), starch-blended polyester resins and poly(butylene terephthalate succinate); resins for which the raw materials are 100% biomass, including polyhydroxyalkanoates such as polyhydroxybutyrate, polyhydroxyvalerate, polyhydroxycaprylate, poly(hydroxybutyrate/hydroxyhexanoate) (PHBH), poly(3-hydroxybutyrate/4-hydroxybutyrate) (P3HB4HB) and poly(hydroxybutyrate/hydroxyvalerate) (PHBV), and also polylactic acid (PLA); and resins from naturally occurring macromolecules such as cellulose, cellulose acetate, cellulose ester resins, starches, esterified starches and chitosan.

Of these, it is preferable to combine a resin which, as a biodegradable resin, has biodegradability in soil or compost but for which the biodegradability in the ocean is poor, such as one which includes biodegradable resin ingredients selected from among polycaprolactone, bio(PBS), PBSA, PBAT, poly(tetramethylene adipate/terephthalate), poly(butylene succinate/carbonate), polyhydroxyalkanoates such as PHBH and PHBV, PLA and resins from naturally occurring macromolecules such as cellulose, starch and chitosan, with the marine biodegradation promoter. The biodegradable resin is more preferably PBSA, PBS, PBAT, PLA or a resin from starch.

To reduce the burden on the environmental, the raw material for the resin which is combined with the marine biodegradation promoter is preferably from biomass, with most preferably 100% being raw material from biomass.

The resin composition of the invention may include a solvent. The solvent may be one which dissolves the resin serving as the matrix while leaving the marine biodegradable polymer compound undissolved as particles, or may be one which dissolves both the resin and the marine biodegradable polymer compound. By suitably adjusting these ingredients, the resin composition may be used as a molded body obtained by film formation such as by casting, or as a coating, ink, surface treatment agent or the like. Examples of preferred solvents include water, hexane, heptane, N-methylpyrrolidone, dimethylformamide, dimethylacetamide, dimethylsulfoxide, dimethylsulfone, acetone, methyl ethyl ketone, diethyl ketone, acetophenone, dimethyl ether, dipropyl ether, tetrahydrofuran, chloroform, methylene chloride, trichloroethylene, ethylene dichloride, dichloroethane, tetrachloroethane, chlorobenzene, methanol, ethanol, n-propanol, isopropanol, butanol, pentanol, methyl glycol, methyl triglycol, hexyl glycol, phenyl glycol, ethylene glycol, propylene glycol, phenol, cresol, polyethylene glycol, benzene, toluene and xylene. One of these may be used alone or two or more may be used in admixture.

When using a solvent, the combined concentration of resin and marine biodegradable polymer compound in the resin composition is preferably from 0.5 to 90 wt%, more preferably from 1 to 80 wt%, even more preferably from 5 to 60 wt%, and most preferably from 10 to 50 wt%. The proportion of marine biodegradable polymer compound relative to the resin, expressed as a weight ratio, is preferably from 99:1 to 10:90, more preferably from 97:3 to 40:60, even more preferably from 95:5 to 50:50, and most preferably from 90:10 to 60:40.

The resin composition of the invention need not include a solvent. In this case, the resin may be melted under applied heat and marine biodegradation promoter that does not melt therein may be added and mixed with the molten resin, or the resin and the marine biodegradable polymer compound may both be melted and mixed together.

The content of the marine biodegradable polymer compound within the resin composition of the invention is preferably from 1 to 50 wt%, more preferably from 3 to 50 wt%, even more preferably from 5 to 45 wt%, still more preferably from 7 to 40 wt%, and most preferably from 10 to 35 wt%. The resin content is preferably from 50 to 99 wt%, more preferably from 50 to 97 wt%, even more preferably from 55 to 95 wt%, still more preferably from 60 to 93 wt%, and most preferably from 65 to 90 wt%. Inclusion of the marine biodegradable polymer compound within this range enables it to be utilized as a marine biodegradation promoter that promotes biodegradability in seawater while maintaining the properties of the biodegradable resin.

The resin composition of the invention may optionally include additives such as antioxidants, parting agents, release agents, surface modifiers, hydrophobizing agents, water repelling agents, hydrophilizing agents, dyes and pigments, colorants, heat stabilizers, light stabilizers, weatherability enhancers, antistatic agents, anti-fogging agents, lubricants, anti-blocking agents, hardeners, softeners, compatibilizers, flame retardants, flow enhancers, plasticizers, dispersants, antimicrobial agents, fillers and metal inactivators. The content of these additives, although not particularly limited so long as there is no loss in the advantageous effects of the invention, is preferably from about 0.1 to about 50 parts by weight per 100 parts by weight of the resin.

In cases where the resin composition includes a solvent, the composition may be prepared by, for example, adding the resin, the marine biodegradable polymer compound and the optional additives to the solvent, either at the same time or in any suitable order, and mixing. Alternatively, in cases where the resin composition does not include a solvent, the resin may be melted and the marine biodegradation promoter and the optional additives may be added thereto, either at the same time or in any suitable order, and mixed; or the resin and the marine biodegradation promoter may be heated, melted together and mixed, and the optional additives then added and mixed therewith.

[Molded Body]

A molded body composed of the marine biodegradation promoter dispersed or dissolved in the resin can be obtained by molding the resin composition. When the resin composition includes a solvent, molding may be carried out using the resin composition directly as is. When the resin composition does not include a solvent, the resin within the resin composition, or both the resin and the marine biodegradation promoter, may be melted by applying heat and molding subsequently carried out.

The molded body may be in the shape of a film, fibers, a sheet or an expansion-molded body, or may have some other shape according to the intended use. The molding method is not particularly limited; use can be made of various methods known to the art. Examples of such methods include blow molding, injection molding, extrusion, compression molding, melt extrusion, film casting and calendering.

EXAMPLES

Synthesis Examples, Examples and Comparative Examples are given below by way of illustration, although the invention is not limited by these Examples.

The volume mean particle sizes (MV) in the Examples and Comparative Examples were measured using the MICROTRACK MT3000 (Nikkiso Co., Ltd.). The molecular weights are absolute molecular weights, which were measured by the static light-scattering method. Specifically, the scattered light intensities of four or more samples of differing concentrations were measured using a nanoparticle analyzer (nano Partica SZ-100, from Horiba, Ltd.) and the molecular weight was determined with a Debye plot. The value of the refractive index concentration increment (dn/dc) used when calculating the absolute molecular weight was measured with a differential refractometer (DRM-3000, from Otsuka Electronics Co., Ltd.). Measurement was carried out using solvents capable of dissolving the respective polymer compounds.

[1] Synthesis of Marine Biodegradable Polyols

[Example 1-1] Synthesis of Marine Biodegradable Polyol A1

Polypropylene Glycol, Diol Type 1000 (Mn = 1,000) (from Fujifilm Wako Pure Chemical Corporation, Ltd.), 1,000.0 g, and 100.0 g of succinic anhydride were dissolved in 500.0 g of acetonitrile within a 5-liter flask, following which 127.2 g of sodium carbonate was added and the flask contents were stirred 3 hours at 60°C. The reaction mixture was then cooled to room temperature and precipitate was removed by filtration. By concentrating the resulting filtrate and further removing solvent under reduced pressure, a polymer compound containing polypropylene glycol substituted at one end or both ends with -COONa was produced.

The polymer compound thus produced was dissolved in a mixed solvent of 500.0 g of deionized water and 500.0 g of methanol, 550.0 g of a 20.0 wt% aqueous solution of calcium chloride was added thereto and the mixture was thoroughly stirred. A marine biodegradable polyol containing ionic bonds separated off in the form of liquid droplets, and so this was recovered by decantation, concentrated and, by further removing solvent under reduced pressure, Marine Biodegradable Polyol A1 containing ionic bonds on the molecule and having hydroxyl groups at both ends was produced. The resulting Marine Biodegradable Polyol A1 was dissolved in chloroform and the molecular weight was measured, whereupon it was found to be 3,800. The theoretical calcium-based number of repeating units composed of divalent anions from the polymer compound was 2.2.

[Example 1-2] Synthesis of Marine Biodegradable Polyol A2

A 1-liter flask was charged with 200.0 g of acetonitrile and 100.0 g of Marine Biodegradable Polyol A1, and dissolution was effected with a stirrer. Next, 100.0 g of methanol was slowly added and re-precipitation was carried out. Precipitate was removed by filtration, following which the resulting solution was concentrated and, by further removing solvent under reduced pressure, Marine Biodegradable Polyol A2 containing ionic bonds on the molecule and having hydroxyl groups at both ends was produced. The resulting Marine Biodegradable Polyol A2 was dissolved in chloroform and the molecular weight was measured, whereupon it was found to be 2,600. The theoretical calcium-based number of repeating units composed of divalent anions from the polymer compound was 1.3.

[Example 1-3] Synthesis of Marine Biodegradable Polyol A3

A polyester diol (Mw = 1,000) (P-1010 from Kuraray Co., Ltd.), 1,000.0 g, and 100.0 g of succinic anhydride were dissolved in 500.0 g of acetonitrile within a 5-liter flask, following which 165.8 g of potassium carbonate was added and the flask contents were stirred 3 hours at 60°C. The reaction mixture was then cooled to room temperature and precipitate was removed by filtration. By concentrating the resulting filtrate and further removing solvent under reduced pressure, a polymer compound containing polyester diol substituted at one end or both ends with -COOK was produced.

The polymer compound thus produced was dissolved in a mixed solvent of 500.0 g of deionized water and 500.0 g of acetonitrile, 550.0 g of a 20.0 wt% aqueous solution of calcium chloride was added thereto and the mixture was thoroughly stirred. A marine biodegradable polyol containing ionic bonds separated off as a white precipitate and so, by removing the supernatant and thereby recovering the precipitate, rinsing with water and subsequently removing the remaining solvent under reduced pressure, Marine Biodegradable Polyol A3 containing ionic bonds on the molecule and having hydroxyl groups at both ends was produced. The resulting Marine Biodegradable Polyol A3 was dissolved in chloroform and the molecular weight was measured, whereupon it was found to be 4,100. The theoretical calcium-based number of repeating units composed of divalent anions from the polymer compound was 2.5.

[Example 1-4] Synthesis of Marine Biodegradable Polyol A4

A polyester diol (Mw = 2,000) (P-2010 from Kuraray Co., Ltd.), 1,000.0 g, and 50.0 g of succinic anhydride were dissolved in 500.0 g of acetonitrile within a 5-liter flask, following which 63.6 g of sodium carbonate was added and the flask contents were stirred 3 hours at 60°C. The reaction mixture was then cooled to room temperature and precipitate was removed by filtration. By concentrating the resulting filtrate and further removing solvent under reduced pressure, a polymer compound containing polyester diol substituted at one end or both ends with -COOK was produced.

The polymer compound thus produced was dissolved in a mixed solvent of 500.0 g of deionized water and 500.0 g of acetonitrile, 275.0 g of a 20.0 wt% aqueous solution of calcium chloride was added thereto and the mixture was thoroughly stirred. A marine biodegradable polyol containing ionic bonds separated off as a white precipitate and so, by removing the supernatant and thereby recovering the precipitate, rinsing with water and subsequently removing the remaining solvent under reduced pressure, Marine Biodegradable Polyol A4 containing ionic bonds on the molecule and having hydroxyl groups at both ends was produced. The resulting Marine Biodegradable Polyol A4 was dissolved in chloroform and the molecular weight was measured, whereupon it was found to be 7,000. The theoretical calcium-based number of repeating units composed of divalent anions from the polymer compound was 2.2.

[Example 1-5] Synthesis of Marine Biodegradable Polyol A5

A 1-liter flask was charged with 200.0 g of acetonitrile and 100.0 g of Marine Biodegradable Polyol A3, and dissolution was effected with a stirrer. Next, 100.0 g of methanol was slowly added and re-precipitation was carried out. Precipitate was removed by filtration, following which the resulting solution was concentrated and, by further removing solvent under reduced pressure, Marine Biodegradable Polyol A5 containing ionic bonds on the molecule and having hydroxyl groups at both ends was produced. The resulting Marine Biodegradable Polyol A5 was dissolved in chloroform and the molecular weight was measured, whereupon it was found to be 2,800. The theoretical calcium-based number of repeating units composed of divalent anions from the polymer compound was 1.4.

[Example 1-6] Synthesis of Marine Biodegradable Polyol A6

A polycaprolactone diol (Mn = 1,000) (Placcel 210B, from Daicel Corporation), 1,000.0 g, and 100.0 g of succinic anhydride were dissolved in 500.0 g of acetonitrile within a 5-liter flask, following which 127.2 g of sodium carbonate was added and the flask contents were stirred 3 hours at 60°C. The reaction mixture was then cooled to room temperature and precipitate was removed by filtration. By concentrating the resulting filtrate and further removing solvent under reduced pressure, a polymer compound containing polycaprolactone diol substituted at one end or both ends with -COOK was produced.

The polymer compound thus produced was dissolved in a mixed solvent of 500.0 g of deionized water and 500.0 g of acetonitrile, 550.0 g of a 20.0 wt% aqueous solution of calcium chloride was added thereto and the mixture was thoroughly stirred. A marine biodegradable polyol containing ionic bonds separated off as a white precipitate and so, by removing the supernatant and thereby recovering the precipitate, rinsing with water and subsequently removing the remaining solvent under reduced pressure, Marine Biodegradable Polyol A6 containing ionic bonds on the molecule and having hydroxyl groups at both ends was produced. The resulting Marine Biodegradable Polyol A6 was dissolved in chloroform and the molecular weight was measured, whereupon it was found to be 3,600. The theoretical calcium-based number of repeating units composed of divalent anions from the polymer compound was 2.1.

[Example 1-7] Synthesis of Marine Biodegradable Polyol A7

A polycaprolactone diol (Mn = 2,000) (Placcel 220N, from Daicel Corporation), 1,000.0 g, and 50.0 g of succinic anhydride were dissolved in 500.0 g of acetonitrile within a 5-liter flask, following which 70.5 g of potassium carbonate was added and the flask contents were stirred 3 hours at 60°C. The reaction mixture was then cooled to room temperature and precipitate was removed by filtration. By concentrating the resulting filtrate and further removing solvent under reduced pressure, a polymer compound containing polycaprolactone diol substituted at one end or both ends with -COOK was produced.

The polymer compound thus produced was dissolved in a mixed solvent of 500.0 g of deionized water and 500.0 g of acetonitrile, 240.0 g of a 20.0 wt% aqueous solution of magnesium chloride was added thereto and the mixture was thoroughly stirred. A marine biodegradable polyol containing ionic bonds separated off as a white precipitate and so, by removing the supernatant and thereby recovering the precipitate, rinsing with water and subsequently removing the remaining solvent under reduced pressure, Marine Biodegradable Polyol A7 containing ionic bonds on the molecule and having hydroxyl groups at both ends was produced. The resulting Marine Biodegradable Polyol A7 was dissolved in chloroform and the molecular weight was measured, whereupon it was found to be 7,500. The theoretical calcium-based number of repeating units composed of divalent anions from the polymer compound was 2.4.

[Example 1-8] Synthesis of Marine Biodegradable Polyol A8

A 2-liter flask was charged with 200.0 g of acetonitrile and 100.0 g of Marine Biodegradable Polyol A6, and dissolution was effected with a stirrer. Next, 100.0 g of methanol was slowly added and re-precipitation was carried out. Precipitate was removed by filtration, following which the resulting solution was concentrated and, by further removing solvent under reduced pressure, Marine Biodegradable Polyol A8 containing ionic bonds on the molecule and having hydroxyl groups at both ends was produced. The resulting Marine Biodegradable Polyol A8 was dissolved in chloroform and the molecular weight was measured, whereupon it was found to be 2,600. The theoretical calcium-based number of repeating units composed of divalent anions from the polymer compound was 1.2.

[Example 1-9] Synthesis of Marine Biodegradable Polyol A9

A polycarbonate diol (Mw = 500) (C-590, from Kuraray Co., Ltd.), 1,000.0 g, and 200.0 g of succinic anhydride were dissolved in 1,000.0 g of acetonitrile within a 5-liter flask, following which 300.0 g of potassium carbonate was added and the flask contents were stirred 3 hours at 60°C. The reaction mixture was then cooled to room temperature and precipitate was removed by filtration. By concentrating the resulting filtrate and further removing solvent under reduced pressure, a polymer compound containing polycaprolactone diol substituted at one end or both ends with -COOK was produced.

The polymer compound thus produced was dissolved in a mixed solvent of 500.0 g of deionized water and 500.0 g of acetonitrile, 1,000.0 g of a 20.0 wt% aqueous solution of calcium chloride was added thereto and the mixture was thoroughly stirred. A marine biodegradable polyol containing ionic bonds separated off as a white precipitate and so, by removing the supernatant and thereby recovering the precipitate, rinsing with water and subsequently removing the remaining solvent under reduced pressure, Marine Biodegradable Polyol A9 containing ionic bonds on the molecule and having hydroxyl groups at both ends was produced. The resulting Marine Biodegradable Polyol A9 was dissolved in chloroform and the molecular weight was measured, whereupon it was found to be 2,200. The theoretical calcium-based number of repeating units composed of divalent anions from the polymer compound was 2.3.

[Example 1-10] Synthesis of Marine Biodegradable Polyol A10

A trifunctional polyester polyol (Mw = 500) (F-590, from Kuraray Co., Ltd.), 1,000.0 g, and 320.0 g of succinic anhydride were dissolved in 1,000.0 g of acetonitrile within a 5-liter flask, following which 440.0 g of potassium carbonate was added and the flask contents were stirred 3 hours at 60°C. The reaction mixture was then cooled to room temperature and precipitate was removed by filtration. By concentrating the resulting filtrate and further removing solvent under reduced pressure, a polymer compound containing polycaprolactone diol substituted at the end with -COOK was produced.

The polymer compound thus produced, 50.0 g, and 450.0 g of Polyol A3 were weighed out into a 2-liter flask and dissolved in a mixed solvent of 500.0 g of deionized water and 500.0 g of acetonitrile, 250.0 g of a 20.0 wt% aqueous solution of calcium chloride was added thereto and the mixture was thoroughly stirred. A marine biodegradable polyol containing ionic bonds separated off as a white precipitate and so, by removing the supernatant and thereby recovering the precipitate, rinsing with water and subsequently removing the remaining solvent under reduced pressure, Marine Biodegradable Polyol A10 containing ionic bonds on the molecule and having hydroxyl groups at both ends was produced. The resulting Marine Biodegradable Polyol A10 was dissolved in chloroform and the molecular weight was measured, whereupon it was found to be 7,800. The theoretical calcium-based number of repeating units composed of divalent anions from the polymer compound was 5.8.

[Example 1-11] Synthesis of Marine Biodegradable Polyol A11

A polycaprolactone diol (NM = 1,000) (Placcel 210B, from Daicel Corporation), 500.0 g, and 50.0 g of succinic anhydride were dissolved in 500.0 g of acetonitrile within a 5-liter flask, following which 84.4 g of potassium carbonate was added and the flask contents were stirred 3 hours at 60°C. The reaction mixture was then cooled to room temperature and precipitate was removed by filtration. By concentrating the resulting filtrate and further removing solvent under reduced pressure, a polymer compound containing polycaprolactone diol substituted at one end or both ends with -COOK was produced.

The polymer compound thus produced was dissolved in a mixed solvent of 500.0 g of deionized water and 500.0 g of acetonitrile, 580.0 g of a 20.0 wt% aqueous solution of aluminum sulfate was added thereto and the mixture was thoroughly stirred. A marine biodegradable polyol containing ionic bonds separated off as a white precipitate and so, by removing the supernatant and thereby recovering the precipitate, rinsing with water and subsequently removing the remaining solvent under reduced pressure, Marine Biodegradable Polyol A11 containing ionic bonds on the molecule and having hydroxyl groups at both ends was produced. The resulting Marine Biodegradable Polyol A11 was a crosslinked structure that does not readily dissolve in a medium.

A summary of Marine Biodegradable Polyols A1 to A11 is presented in Table 1.

[Table 1]

|  | Marine biodegradable polyol (skeleton component) | State | Ion linkage | Absolute molecular weight | Number of repeating units |
|---|---|---|---|---|---|
| Example 1-1 | A1 (PPG, Mn = 1,000) | liquid | Ca | 3,800 | 22 |
| Example 1-2 | A2 (PPG, Mn = 1,000) | liquid | Ca | 2,600 | 1.3 |
| Example 1-3 | A3 (polyester, Mw = 1,000) | liquid | Ca | 4,100 | 25 |
| Example 1-4 | A4 (polyester, Mw = 2,000) | liquid | Ca | 7,000 | 22 |
| Example 1-5 | A5 (polyester, Mw = 1,000) | liquid | Ca | 2,800 | 1.4 |
| Example 1-6 | A6 (polycaprolactone, Mn = 1,000) | liquid | Ca | 3,600 | 21 |
| Example 1-7 | A7 (polycaprolactone, Mn = 2,000) | liquid | Mg | 7,500 | 2.4 |
| Example 1-8 | A8 (polycaprolactone, Mn = 1,000) | solid | Ca | 2,600 | 1.2 |
| Example 1-9 | A9 (polycarbonate, Mw = 500) | solid | Ca | 2,200 | 23 |
| Example 1-10 | A10 (trifunctional polyester, Mw = 500) | solid | Ca | 7,800 | 58 |
| Example 1-11 | A11 (polycaprolactone, Mn = 1,000) | solid | Al | - | - |

[2] Biodegradability Tests on Marine Biodegradable Polyols A1 to A11

[Examples 2-1 to 2-11]

A seawater biodegradation test was performed by the following method on Marine Biodegradable Polyols A1 to A11. The degree of biodegradation relative to cellulose was evaluated using microcrystalline cellulose (Avicel PH-101, from Sigma-Aldrich Co.) as the control material. The results are shown in Table 2.

<Test Method and Conditions>

Method of Measuring Degree of Biodegradation: The oxygen consumption was measured with a closed respirometer (see ASTM D6691)

Test Apparatus: OxiTop IDS (WTW)

Incubation Temperature: $30 \pm 1°C$, in the dark

$$\text{Degree of Biodegradation (\%)} = (BOD_O - BOD_B) / ThOD \times 100$$

$BOD_O$: Biochemical oxygen demand in test or inoculum activity verification (measured value in mg)

$BOD_B$: Average biochemical oxygen demand in blank test (measured value in mg)

ThOD: Theoretical oxygen demand required when test material or control material has completely oxidized (calculated value in mg)

Degree of Biodegradation Relative to Cellulose (%) =

(maximum degree of biodegradation of test particles/

maximum degree of biodegradation of cellulose) × 100

Seawater (collected from Tokyo Bay (Port of Chiba in Chiba Prefecture))

Foreign matter was removed from the sampled seawater with a 10 $\mu$m filter, after which the seawater was aerated at room temperature (25°C). The following were added as inorganic nutrients: 0.05 g/L of ammonium chloride and 0.1 g/L of potassium dihydrogen phosphate.

[Table 2]

| | Marine biodegradable polyol | Degree of biodegradation (%) | | | | | | | | Degree of biodegradation (maximum value) | Degree of degradation relative to cellulose |
|---|---|---|---|---|---|---|---|---|---|---|---|
| | | 7 days | 14 days | 21 days | 28 days | 35 days | 42 days | 49 days | 56 days | | |
| Example 2-1 | A1 | 18 | 28 | 41 | 47 | 48 | 48 | 47 | 47 | 48 | 74 |
| Example 2-2 | A2 | 20 | 28 | 43 | 49 | 49 | 48 | 47 | 47 | 49 | 75 |
| Example 2-3 | A3 | 26 | 33 | 54 | 58 | 52 | 51 | 52 | 52 | 58 | 89 |
| Example 2-4 | A4 | 30 | 35 | 54 | 64 | 65 | 65 | 64 | 64 | 65 | 100 |
| Example 2-5 | A5 | 28 | 33 | 52 | 59 | 58 | 58 | 58 | 59 | 59 | 91 |
| Example 2-6 | A6 | 35 | 43 | 58 | 68 | 68 | 67 | 68 | 68 | 68 | 105 |
| Example 2-7 | A7 | 37 | 44 | 56 | 62 | 65 | 64 | 65 | 64 | 65 | 100 |
| Example 1-8 | A8 | 36 | 42 | 56 | 66 | 66 | 67 | 66 | 65 | 67 | 103 |
| Example 2-9 | A9 | 17 | 27 | 35 | 40 | 40 | 39 | 39 | 40 | 40 | 62 |
| Example 2-10 | A10 | 19 | 29 | 37 | 41 | 40 | 41 | 41 | 40 | 41 | 63 |
| Example 2-11 | A11 | 15 | 26 | 34 | 38 | 39 | 38 | 39 | 39 | 39 | 60 |
| Control material | cellulose | 26 | 40 | 53 | 63 | 64 | 65 | 64 | 63 | 65 | - |

As demonstrated by the results shown in Table 2, the marine biodegradable polyols of the invention each had a degree of biodegradation relative to cellulose that was 60% or more in incubation periods of up to 56 days.

[3] Synthesis of Marine Biodegradable Polymer Compounds

[Examples 3-1 to 3-13, Comparative Examples 1-1 to 1-3]

The marine biodegradable polyols shown in the Examples below were used after stirring for one hour or more at 90°C under a stream of nitrogen and thoroughly removing moisture.

[Example 3-1] Production of Marine Biodegradable Polymer Particles (AP1 Particles)

A 300 mL flask was charged with the ingredients shown below. Under a stream of nitrogen, the oil bath temperature was set to 90°C and mixing under applied heat was carried out for 30 minutes with a stirrer.

| | |
|---|---|
| Marine Biodegradable Polyol A1 | 100.00 g |
| HDI | 5.31 g |
| DBU | 0.25 g |

Next, the system was allowed to cool and the reacted resin within the flask was taken out onto a stainless steel tray lined with a Teflon® sheet. The resin was then aged 6 hours at 80°C and allowed to cool to room temperature, following which the solid material was crushed using a crusher (Wonder Blender WB-1, from Osaka Chemical Co., Ltd.) and classified on a stainless steel screen (aperture, 26 $\mu$m), thereby producing AP1 particles having a particle size of 23 $\mu$m.

[Example 3-2] Production of Marine Biodegradable Polymer Particles (AP2 Particles)

A 300 mL flask was charged with the ingredients shown below. Under a stream of nitrogen, the oil bath temperature was set to 60°C and mixing under applied heat was carried out for 30 minutes with a stirrer.

| | |
|---|---|
| Marine Biodegradable Polyol A2 | 100.00 g |
| MDI | 10.10 g |
| DBU | 0.25 g |

Next, the system was allowed to cool and the reacted resin within the flask was taken out onto a stainless steel tray lined with a Teflon® sheet. The resin was then aged 6 hours at 80°C and allowed to cool to room temperature, following which the solid material was crushed using a crusher (Wonder Blender WB-1, from Osaka Chemical Co., Ltd.) and classified on a stainless steel screen (aperture, 26 $\mu$m), thereby producing AP2 particles having a MV of 25 $\mu$m.

[Example 3-3] Production of Marine Biodegradable Polymer Particles (AP3 Particles)

A 300 mL flask was charged with the ingredients shown below. Under a stream of nitrogen, the oil bath temperature was set to 85°C and mixing under applied heat was carried out for 30 minutes with a stirrer.

| | |
|---|---|
| Marine Biodegradable Polyol A3 | 100.00 g |
| HDI | 4.71 g |
| DBU | 0.25 g |

Next, the system was allowed to cool and the reacted resin within the flask was taken out onto a stainless steel tray lined with a Teflon® sheet. The resin was then aged 6 hours at 80°C and allowed to cool to room temperature, following which the solid material was crushed using a crusher (Wonder Blender WB-1, from Osaka Chemical Co., Ltd.) and classified on a stainless steel screen (aperture, 26 $\mu$m), thereby producing AP3 particles having a MV of 18 $\mu$m.

[Example 3-4] Production of Marine Biodegradable Polymer Particles (AP4 Particles)

A 300 mL flask was charged with the ingredients shown below. Under a stream of nitrogen, the oil bath temperature was set to 90°C and mixing under applied heat was carried out for 30 minutes with a stirrer.

| | |
|---|---|
| Marine Biodegradable Polyol A4 | 100.00 g |
| HDI | 2.88 g |
| DBU | 0.25 g |

Next, the system was allowed to cool and the reacted resin within the flask was taken out onto a stainless steel tray lined with a Teflon® sheet. The resin was then aged 6 hours at 80°C and allowed to cool to room temperature, following which the solid material was crushed using a crusher (Wonder Blender WB-1, from Osaka Chemical Co., Ltd.) and classified on a stainless steel screen (aperture, 26 $\mu$m), thereby producing AP4 particles having a MV of 20 $\mu$m.

[Example 3-5] Production of Marine Biodegradable Polymer Particles (AP5 Particles)

A 300 mL flask was charged with the ingredients shown below. Under a stream of nitrogen, the oil bath temperature was set to 80°C and mixing under applied heat was carried out for 30 minutes with a stirrer.

| | |
|---|---|
| Marine Biodegradable Polyol A5 | 100.00 g |
| MDI | 9.82 g |

Next, the system was allowed to cool and the reacted resin within the flask was taken out onto a stainless steel tray lined with a Teflon® sheet. The resin was then aged 6 hours at 80°C and allowed to cool to room temperature, following which the solid material was crushed using a crusher (Wonder Blender WB-1, from Osaka Chemical Co., Ltd.) and classified on a stainless steel screen (aperture, 26 $\mu$m), thereby producing AP5 particles having a MV of 20 $\mu$m.

[Example 3-6] Production of Marine Biodegradable Polymer Particles (AP6 Particles)

A 300 mL flask was charged with the ingredients shown below. Under a stream of nitrogen, the oil bath temperature was set to 80°C and mixing under applied heat was carried out for 30 minutes with a stirrer.

| | |
|---|---|
| Marine Biodegradable Polyol A6 | 100.00 g |
| HDI | 5.13 g |
| DBU | 0.25 g |

Next, the system was allowed to cool and the reacted resin within the flask was taken out onto a stainless steel tray lined with a Teflon® sheet. The resin was then aged 6 hours at 80°C and allowed to cool to room temperature, following which the solid material was crushed using a crusher (Wonder Blender WB-1, from Osaka Chemical Co., Ltd.) and classified on a stainless steel screen (aperture, 26 $\mu$m), thereby producing AP6 particles having a MV of 16 $\mu$m.

[Example 3-7] Production of Marine Biodegradable Polymer Particles (AP7 Particles)

A 300 mL flask was charged with the ingredients shown below. Under a stream of nitrogen, the oil bath temperature was set to 90°C and mixing under applied heat was carried out for 30 minutes with a stirrer.

| | |
|---|---|
| Marine Biodegradable Polyol A7 | 100.00 g |
| HDI | 2.46 g |
| DBU | 0.25 g |

Next, the system was allowed to cool and the reacted resin within the flask was taken out onto a stainless steel tray lined with a Teflon® sheet. The resin was then aged 6 hours at 80°C and allowed to cool to room temperature, following which the solid material was crushed using a crusher (Wonder Blender WB-1, from Osaka Chemical Co., Ltd.) and classified on a stainless steel screen (aperture, 26 $\mu$m), thereby producing AP7 particles having a MV of 22 $\mu$m.

[Example 3-8] Production of Marine Biodegradable Polymer Particles (AP8 Particles)

A 300 mL flask was charged with the ingredients shown below. Under a stream of nitrogen, the oil bath temperature was set to 70°C and mixing under applied heat was carried out for 30 minutes with a stirrer.

| | |
|---|---|
| Marine Biodegradable Polyol A8 | 100.00 g |
| MDI | 10.58 g |
| DBU | 0.25 g |

Next, the system was allowed to cool and the reacted resin within the flask was taken out onto a stainless steel tray lined with a Teflon® sheet. The resin was then aged 6 hours at 80°C and allowed to cool to room temperature, following which the solid material was crushed using a crusher (Wonder Blender WB-1, from Osaka Chemical Co., Ltd.) and classified on a stainless steel screen (aperture, 26 $\mu$m), thereby producing AP8 particles having a MV of 22 $\mu$m.

[Example 3-9] Production of Marine Biodegradable Polymer Particles (AP9 Particles)

A 300 mL flask was charged with the ingredients shown below. Under a stream of nitrogen, the oil bath temperature was set to 90°C and mixing under applied heat was carried out for 30 minutes with a stirrer.

| | |
|---|---|
| Marine Biodegradable Polyol A7 | 80.00 g |
| Marine Biodegradable Polyol A9 | 10.05 g |
| HDI | 2.82 g |
| DBU | 0.25 g |

Next, the system was allowed to cool and the reacted resin within the flask was taken out onto a stainless steel tray lined with a Teflon® sheet. The resin was then aged 6 hours at 80°C and allowed to cool to room temperature, following which the solid material was crushed using a crusher (Wonder Blender WB-1, from Osaka Chemical Co., Ltd.) and classified on a stainless steel screen (aperture, 26 $\mu$m), thereby producing AP9 particles having a MV of 23 $\mu$m.

[Example 3-10] Production of Marine Biodegradable Polymer Particles (AP10 Particles)

A 300 mL flask was charged with the ingredients shown below. Under a stream of nitrogen, the oil bath temperature was set to 90°C and mixing under applied heat was carried out for 30 minutes with a stirrer.

| | |
|---|---|
| Marine Biodegradable Polyol A4 | 85.00 g |
| Marine Biodegradable Polyol A10 | 10.52 g |
| IPDI | 3.59 g |
| DBU | 0.25 g |

Next, the system was allowed to cool and the reacted resin within the flask was taken out onto a stainless steel tray lined with a Teflon® sheet. The resin was then aged 6 hours at 80°C and allowed to cool to room temperature, following which the solid material was crushed using a crusher (Wonder Blender WB-1, from Osaka Chemical Co., Ltd.) and classified on a stainless steel screen (aperture, 26 $\mu$m), thereby producing AP10 particles having a MV of 18 $\mu$m.

[Example 3-11] Production of Marine Biodegradable Polymer Particles (AP11 Particles)

A 300 mL flask was charged with the ingredients shown below. Under a stream of nitrogen, the oil bath temperature was set to 85°C and mixing under applied heat was carried out for 30 minutes with a stirrer.

| | |
|---|---|
| Marine Biodegradable Polyol A7 | 95.00 g |
| Marine Biodegradable Polyol A11 | 3.66 g |
| HDI | 2.60 g |
| DBU | 0.25 g |

Next, the system was allowed to cool and the reacted resin within the flask was taken out onto a stainless steel tray lined with a Teflon® sheet. The resin was then aged 6 hours at 80°C and allowed to cool to room temperature, following which the solid material was crushed using a crusher (Wonder Blender WB-1, from Osaka Chemical Co., Ltd.) and classified on a stainless steel screen (aperture, 26 $\mu$m), thereby producing AP11 particles having a MV of 20 $\mu$m.

[Example 3-12] Production of Marine Biodegradable Polymer Particles (AP12 Particles)

A 300 mL flask was charged with the ingredients shown below. Under a stream of nitrogen, the oil bath temperature was set to 80°C and mixing under applied heat was carried out for 30 minutes with a stirrer.

| | |
|---|---|
| Marine Biodegradable Polyol A2 | 45.00 g |
| Marine Biodegradable Polyol A3 | 70.96 g |
| HDI | 6.40 g |
| DBU | 0.25 g |

Next, the system was allowed to cool and the reacted resin within the flask was taken out onto a stainless steel tray lined with a Teflon® sheet. The resin was then aged 6 hours at 80°C and allowed to cool to room temperature, following which the solid material was crushed using a crusher (Wonder Blender WB-1, from Osaka Chemical Co., Ltd.) and classified on a stainless steel screen (aperture, 26 μm), thereby producing AP12 particles having a MV of 18 μm.

[Example 3-13] Production of Marine Biodegradable Polymer Particles (AP13 Particles)

A 300 mL flask was charged with the ingredients shown below. Under a stream of nitrogen, the oil bath temperature was set to 90°C and mixing under applied heat was carried out for 30 minutes with a stirrer.

| | |
|---|---|
| Marine Biodegradable Polyol A5 | 45.00 g |
| Marine Biodegradable Polyol A6 | 57.86 g |
| HDI | 5.67 g |
| DBU | 0.25 g |

Next, the system was allowed to cool and the reacted resin within the flask was taken out onto a stainless steel tray lined with a Teflon® sheet. The resin was then aged 6 hours at 80°C and allowed to cool to room temperature, following which the solid material was crushed using a crusher (Wonder Blender WB-1, from Osaka Chemical Co., Ltd.) and classified on a stainless steel screen (aperture, 26 μm), thereby producing AP13 particles having a MV of 21 μm.

[Example 3-14] Production of Marine Biodegradable Polymer Particles (AP14 Particles)

A 300 mL flask was charged with the ingredients shown below. Under a stream of nitrogen, the oil bath temperature was set to 90°C and mixing under applied heat was carried out for 30 minutes with a stirrer.

| | |
|---|---|
| Marine Biodegradable Polyol A1 | 35.00 g |
| Marine Biodegradable Polyol A3 | 37.76 g |
| Marine Biodegradable Polyol A8 | 23.95 g |
| Marine Biodegradable Polyol A9 | 6.75 g |
| HDI | 5.67 g |
| DBU | 0.25 g |

Next, the system was allowed to cool and the reacted resin within the flask was taken out onto a stainless steel tray lined with a Teflon® sheet. The resin was then aged 6 hours at 80°C and allowed to cool to room temperature, following which the solid material was crushed using a crusher (Wonder Blender WB-1, from Osaka Chemical Co., Ltd.) and classified on a stainless steel screen (aperture, 26 μm), thereby producing AP14 particles having a MV of 24 μm.

[Comparative Example 1-1] Production of BP1 Particles

A 300 mL flask was charged with the ingredients shown below. Under a stream of nitrogen, the oil bath temperature was set to 90°C and mixing under applied heat was carried out for 30 minutes with a stirrer.

| | |
|---|---|
| Polypropylene glycol (Diol Type 1000, from Fujifilm Wako Pure Chemical Corporation, Ltd.) | 100.00 g |
| MDI | 26.25 g |
| DBU | 0.25 g |

Next, the system was allowed to cool and the reacted resin within the flask was taken out onto a stainless steel tray lined with a Teflon® sheet. The resin was then aged 6 hours at 80°C and allowed to cool to room temperature, following which the solid material was crushed using a crusher (Wonder Blender WB-1, from Osaka Chemical Co., Ltd.) and classified on a stainless steel screen (aperture, 26 µm), thereby producing BP1 particles having a MV of 23 µm.

[Comparative Example 1-2] Production of BP2 Particles

A 300 mL flask was charged with the ingredients shown below. Under a stream of nitrogen, the oil bath temperature was set to 90°C and mixing under applied heat was carried out for 30 minutes with a stirrer.

| | |
|---|---|
| Polyester diol (P-2010, from Kuraray Co., Ltd.) | 100.00 g |
| HDI | 18.48 g |
| DBU | 0.25 g |

Next, the system was allowed to cool and the reacted resin within the flask was taken out onto a stainless steel tray lined with a Teflon® sheet. The resin was then aged 6 hours at 80°C and allowed to cool to room temperature, following which the solid material was crushed using a crusher (Wonder Blender WB-1, from Osaka Chemical Co., Ltd.) and classified on a stainless steel screen (aperture, 26 µm), thereby producing BP2 particles having a MV of 21 µm.

[Comparative Example 1-3] Production of BP3 Particles

A 300 mL flask was charged with the ingredients shown below. Under a stream of nitrogen, the oil bath temperature was set to 90°C and mixing under applied heat was carried out for 30 minutes with a stirrer.

| | |
|---|---|
| Polycaprolactone diol (Placcel 220N, from Daicel Corporation) | 100.00 g |
| HDI | 9.24 g |

Next, the system was allowed to cool and the reacted resin within the flask was taken out onto a stainless steel tray lined with a Teflon® sheet. The resin was then aged 6 hours at 80°C and allowed to cool to room temperature, following which the solid material was crushed using a crusher (Wonder Blender WB-1, from Osaka Chemical Co., Ltd.) and classified on a stainless steel screen (aperture, 26 µm), thereby producing BP3 particles having a MV of 16 µm.

A summary of Particles AP 1 to AP14 and BP1 to BP3 is presented in Table 3.

[Table 3]

| | | Particles | Resin ingredient 1 (polyol) | Resin ingredient 2 (isocyanate) | State |
|---|---|---|---|---|---|
| | Example 3-1 | AP1 | A1 (PPG: 1000) | HDI | solid |
| | Example 3-2 | AP2 | A2 (PPG: 1000) | MDI | solid |
| | Example 3-3 | AP3 | A3 (polyester: 1000) | HDI | solid |
| | Example 3-4 | AP4 | A4 (polyester: 2000) | HDI | solid |
| | Example 3-5 | AP5 | A5 (polyester: 1000) | MDI | solid |
| | Example 3-6 | AP6 | A6 (polycaprolactone: 1000) | HDI | solid |
| | Example 3-7 | AP7 | A7 (polycaprolactone: 2000) | HDI | solid |
| | Example 3-8 | AP8 | A8 (polycaprolactone: 1000) | MDI | solid |
| | Example 3-9 | AP9 | A9 (polycarbonate: 500) | HDI | solid |
| | Example 3-10 | AP10 | A4 (polyester: 2000)<br>A10 (trifunctional polyester) | IPDI | solid |
| | Example 3-11 | AP11 | A7 (polycaprolactone: 2000)<br>A11 (trifunctional polycaprolactone) | HDI | solid |

(continued)

| | Particles | Resin ingredient 1 (polyol) | Resin ingredient 2 (isocyanate) | State |
|---|---|---|---|---|
| Example 3-12 | AP 12 | A2 (PPG: 1000)<br>A3 (polyester: 1000) | HDI | solid |
| Example 3-13 | AP 13 | A5 (polyester: 1000)<br>A6 (polycaprolactone: 1000) | HDI | solid |
| Example 3-14 | AP14 | A1 (PPG: 1000)<br>A3 (polyester: 1000)<br>A8 (polycaprolactone: 1000)<br>A9 (polycarbonate: 500) | HDI | solid |
| Comparative Example 1-1 | BP1 | polypropylene glycol: 1000 | MDI | solid |
| Comparative Example 1-2 | BP2 | polyester diol: 2000 | HDI | solid |
| Comparative Example 1-3 | BP3 | polycaprolactone diol: 2000 | HDI | solid |

[4] Measurement of Basic Properties

[Examples 4-1 to 4-14, Comparative Examples 2-1 to 2-3]

The melting temperature, contact angle and tensile strength were measured by the following methods. The results are shown in Table 4.

[Measurement of Melting Temperature]

The melting temperature was measured using a differential scanning calorimeter (DSC 6200, from Seiko Instruments Inc.). Specifically, a 10 mg specimen was precisely weighed, the weighed specimen was placed in an aluminum pan. Using an empty aluminum pan as the reference and under normal temperature and humidity, temperature ramp-up at a rate of 10°C/min was carried out over a measurement temperature range of 20°C to 200°C. The glass transition temperature (Tg) was calculated from the resulting reversing heat flow curve. That is, the midpoint of the straight line connecting the points of intersection at each tangent of the endothermic curve to the baseline was determined, and this was treated as Tg. The endothermic (melting) peak point on the resulting curve was computed as the melting temperature.

[Measurement of Contact Angle]

The particles obtained in the respective Examples were melted at 150°C and press-molded to produce a 150 $\mu$m thick film. A water droplet was deposited on the resulting film in accordance with JIS R 3257 and the contact angle after 30 seconds was measured using a contact angle meter (Drop Master 300, from Kyowa Interface Science Co., Ltd.).

[Measurement of Tensile Stress]

In accordance with JIS K 7139-A22, dumbbell specimens were fabricated from each film and the tensile stress (yield point) was measured using a universal testing machine (MCT-2150, from A&D Company, Ltd.). Each specimen was measured five times and the average of the measurements was treated as the tensile stress.

[Table 4]

| | Particles | Melting temperature (°C) | Contact angle (°) | Tensile stress (MPa) |
|---|---|---|---|---|
| Example 4-1 | AP1 | 80 | 72 | 10 |
| Example 4-2 | AP2 | 90 | 78 | 9 |
| Example 4-3 | AP3 | 85 | 96 | 8 |

(continued)

|  | Particles | Melting temperature (°C) | Contact angle (°) | Tensile stress (MPa) |
|---|---|---|---|---|
| Example 4-4 | AP4 | 82 | 98 | 7 |
| Example 4-5 | AP5 | 95 | 92 | 7 |
| Example 4-6 | AP6 | 81 | 75 | 6 |
| Example 4-7 | AP7 | 83 | 78 | 8 |
| Example 4-8 | AP8 | 84 | 75 | 9 |
| Example 4-9 | AP9 | 93 | 83 | 5 |
| Example 4-10 | AP10 | 92 | 96 | 8 |
| Example 4-11 | AP11 | 88 | 89 | 7 |
| Example 4-12 | AP12 | 86 | 73 | 6 |
| Example 4-13 | AP13 | 85 | 72 | 8 |
| Example 4-14 | AP14 | 92 | 71 | 5 |
| Comparative Example 2-1 | BP1 | 106 | 68 | 10 |
| Comparative Example 2-2 | BP2 | 85 | 65 | 15 |
| Comparative Example 2-3 | BP3 | 90 | 68 | 17 |

[5] Confirmation Test 1 in Seawater (Weight Loss)

[Examples 5-1 to 5-14, Comparative Examples 3-1 to 3-3]

Particles AP1 to AP14 and Particles BP1 to BP3 were press-molded at 150°C to produce in each case a 200 μm thick film.

The resulting film was cut into 20 mm squares which were then inserted between layers of stainless steel netting, immersed in seawater (sampled from Tokyo Bay [Port of Chiba in Chiba Prefecture]) that had been placed in a 15 L water tank, and the weight loss over time after 30 days, 60 days and 90 days of immersion was examined.

The results obtained are shown in Table 5.

[Table 5]

|  | Particles | Immersion time and weight loss (%) | | |
|---|---|---|---|---|
|  |  | 30 days | 60 days | 90 days |
| Example 5-1 | AP1 | 4 | 12 | 20 |
| Example 5-2 | AP2 | 2 | 8 | 16 |
| Example 5-3 | AP3 | 6 | 12 | 24 |
| Example 5-4 | AP4 | 5 | 10 | 19 |
| Example 5-5 | AP5 | 1 | 9 | 18 |
| Example 5-6 | AP6 | 2 | 13 | 20 |
| Example 5-7 | AP7 | 6 | 14 | 22 |
| Example 5-8 | AP8 | 2 | 7 | 16 |
| Example 5-9 | AP9 | 4 | 11 | 21 |
| Example 5-10 | AP 10 | 5 | 18 | 25 |
| Example 5-11 | AP11 | 4 | 16 | 24 |
| Example 5-12 | AP12 | 3 | 10 | 21 |

(continued)

| | Particles | Immersion time and weight loss (%) | | |
|---|---|---|---|---|
| | | 30 days | 60 days | 90 days |
| Example 5-13 | AP13 | 4 | 9 | 19 |
| Example 5-14 | AP14 | 5 | 15 | 22 |
| Comparative Example 3-1 | BP1 | 0 | 0 | 0 |
| Comparative Example 3-2 | BP2 | 0 | 0 | 0 |
| Comparative Example 3-3 | BP3 | 0 | 0 | 0 |

From the results shown in Table 5, it appears that, concurrent with disintegration by seawater, biodegradability is accelerated owing to the presence of microorganisms in the seawater.

[6] Seawater Solubility Test in Molded Resin Articles

[Examples 6-1 to 6-14, Comparative Examples 4-1 to 4-3]

The particles in the respective Examples (Particles AP1 to AP14, Particles BP1 to BP3) were kneaded at 140°C with the biodegradable resin PBSA (FD-92, from Mitsubishi Chemical Corporation) to a concentration of 20 wt%, and the kneaded material was pressed at 150°C to produce in each case a 200 $\mu$m thick film (Examples 5-1 to 5-14, Comparative Examples 5-1 to 5-3). In addition, PBSA alone (containing no particles) was pressed at 150°C to produce a 150 $\mu$m thick film (Comparative Example 5-4).
The presence or absence of the particle shapes within the film and the contact angle measurement results for the produced films are shown in Table 5. The presence or absence of particle shapes was determined by visual examination, and the contact angles were measured by the method described above in "[4] Measurement of Basic Properties."
The resulting films were cut into 10 mm squares, which were placed in 200 mL of deionized water or 200 mL of seawater (collected from Tokyo Bay [Port of Chiba in Chiba Prefecture]) and left at rest for 7 days or 30 days at 25°C. The film was then taken out and the film surface and appearance were examined with a scanning electron microscope. The results are shown in Table 6.

[Table 6]

| | Polymer compound | Water | | Aqueous sodium chloride solution | | Particles present/ absent after molding | Contact angle (°) |
|---|---|---|---|---|---|---|---|
| | | 7 days | 30 days | 7 days | 30 days | | |
| Example 6-1 | AP1 | unchanged | unchanged | surface changed | surface became uneven | absent | 70 |
| Example 6-2 | AP2 | unchanged | unchanged | surface changed | surface became uneven | absent | 72 |
| Example 6-3 | AP3 | unchanged | unchanged | surface changed | surface became uneven | absent | 95 |
| Example 6-4 | AP4 | unchanged | unchanged | surface changed | surface became uneven | absent | 97 |
| Example 6-5 | AP5 | unchanged | unchanged | surface changed | surface became uneven | absent | 90 |

(continued)

| | Polymer compound | Water | | Aqueous sodium chloride solution | | Particles present/ absent after molding | Contact angle (°) |
|---|---|---|---|---|---|---|---|
| | | 7 days | 30 days | 7 days | 30 days | | |
| Example 6-6 | AP6 | unchanged | unchanged | surface changed | surface became uneven | absent | 71 |
| Example 6-7 | AP7 | unchanged | unchanged | surface changed | surface became uneven | absent | 75 |
| Example 6-8 | AP8 | unchanged | unchanged | surface changed | surface became uneven | absent | 70 |
| Example 6-9 | AP9 | unchanged | unchanged | surface changed | surface became uneven | absent | 82 |
| Example 6-10 | AP10 | unchanged | unchanged | surface changed | surface became uneven | present | 95 |
| Example 6-11 | AP11 | unchanged | unchanged | surface changed | surface became uneven | present | 88 |
| Example 6-12 | AP12 | unchanged | unchanged | surface changed | surface became uneven | absent | 71 |
| Example 6-13 | AP13 | unchanged | unchanged | surface changed | surface became uneven | absent | 70 |
| Example 6-14 | AP14 | unchanged | unchanged | surface changed | surface became uneven | absent | 70 |
| Comparative Example 4-1 | BP1 | unchanged | unchanged | unchanged | unchanged | absent | 67 |
| Comparative Example 4-2 | BP2 | unchanged | unchanged | unchanged | unchanged | absent | 66 |
| Comparative Example 4-3 | BP3 | unchanged | unchanged | unchanged | unchanged | absent | 62 |
| Comparative Example 4-4 | PBSA | unchanged | unchanged | unchanged | unchanged | - | 67 |

From the results shown in Table 6, it appears that, concurrent with disintegration by seawater, biodegradability is accelerated owing to the presence of microorganisms in the seawater.

From the above results, the inventive marine biodegradable polyol having ionic bonds and the inventive marine biodegradable polymer compound having repeating units with ionic bonds on the main chain maintain hydrophobicity in fresh water, yet in seawater they readily dissolve or hydrophilize by breaking up into smaller molecules due to biodegradation or undergoing salt substitution earlier than biodegradable resins. Hence, by adding the marine biodegradation promoter of the invention to a resin composition having biodegradability in soil or compost or to a mixed composition having weak biodegradability in the ocean, the composition becomes porous in seawater, helping microorganisms to adhere and working to accelerate biodegradation, ultimately making it possible to increase the marine biodegradability of the overall composition and reduce the burden on the environment. By adding this compound and thereby combining it with conventional resins having biodegradability in soil or compost, materials of dramatically improved marine biodegradability can be obtained. Moreover, by suitably changing the structure of the organic anions, it is possible to introduce numerous advantageous effects, such as adjusting the melting temperature and melt viscosity, adjusting the degree of crystallization, adjusting adherence by microorganisms and biodegradability, adjusting physical properties such as the tensile strength, flexural strength and elasticity of the resin, improving compatibility with resins, adjusting the degree of hydrophobization, adjusting hydrophobization and adjusting adhesiveness and plasticity, thus enabling improvements to be made both in terms of the biodegradability and in terms of the physical properties of the mixed resin composition. The marine biodegradable polymer compound of the invention, in addition to applications as a marine biodegradable promoter, is useful as well as a polymer substitute.

**Claims**

1. A marine biodegradable polyol which is a compound having a structure that includes two or more organic anions of molecular weights of from 100 to 5,000, the organic anions being bonded via ionic bonds with a metal cation having a valence of two or more, and having on the molecule two or more hydroxyl groups.

2. The marine biodegradable polyol of claim 1, wherein the organic anions have repeating units containing at least one bond selected from the group consisting of ether, ester, amide and carbonate bonds.

3. The marine biodegradable polyol of claim 2, wherein the repeating units are ones which originate from polyalkylene glycol, polyester, polycaprolactone, polycarbonate or polyamide.

4. The marine biodegradable polyol of claim 2 or 3, wherein the repeating units are ones which include at least one bond from ether and ester bonds.

5. The marine biodegradable polyol of any one of claims 1 to 4, wherein the organic anions are ones which have an anionic substituent selected from the group consisting of the carboxylic acid anion ($-COO^-$), sulfonic acid anion ($-SO_3^-$), sulfuric acid anion ($-O-SO_3^-$) and phosphoric acid anion ($-P(=O)(OH)-O$).

6. The marine biodegradable polyol of any one of claims 1 to 5, wherein the organic anions are ones which have a carboxylic acid anion.

7. The marine biodegradable polyol of any one of claims 1 to 6, wherein the metal cation having a valence of two or more is a calcium ion, magnesium ion or aluminum ion.

8. The marine biodegradable polyol of any one of claims 1 to 7 which has one or more hydroxyl group at an end of a main chain.

9. The marine biodegradable polyol of any one of claims 1 to 8 which is a linear polymer compound.

10. The marine biodegradable polyol of any one of claims 1 to 9, which does not include a cyclic structure on the molecule.

11. The marine biodegradable polyol of any one of claims 1 to 10, wherein the molecular weight is from 500 to 10,000.

12. The marine biodegradable polyol of any one of claims 1 to 11 which has two or more metal cations with a valence of two or more per molecule.

13. The marine biodegradable polyol of any one of claims 1 to 12 which has a degree of degradation relative to cellulose that is 60% or more.

14. A linking agent which imparts marine biodegradability using the marine biodegradable polyol of any one of claims 1 to 13.

15. A marine biodegradable polymer compound obtained by successive polymerization of the marine biodegradable polyol of any one of claims 1 to 13 and a compound having two or more reactive groups which react with hydroxyl groups.

**16.** The marine biodegradable polymer compound of claim 15 which is a polyurethane or a polyester.

**17.** A marine biodegradable resin composition comprising the marine biodegradable polymer compound of claim 15 or 16 and a resin.

**18.** The marine biodegradable resin composition of claim 17, wherein the resin is a biodegradable resin.

**19.** The marine biodegradable resin composition of claim 17 or 18, wherein the content of the marine biodegradable polymer is from 3 to 50 wt% and the content of the biodegradable resin is from 50 to 97 wt%.

**20.** A molded body obtained from the marine biodegradable resin composition of any one of claims 17 to 19.

## INTERNATIONAL SEARCH REPORT

| | International application No. |
|---|---|
| | **PCT/JP2021/043940** |

**A. CLASSIFICATION OF SUBJECT MATTER**

*C08G 63/00*(2006.01)i
FI: C08G63/00

According to International Patent Classification (IPC) or to both national classification and IPC

**B. FIELDS SEARCHED**

Minimum documentation searched (classification system followed by classification symbols)

C08G63/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2000-281805 A (DAICEL CHEM IND LTD.) 10 October 2000 (2000-10-10) claims, paragraphs [0013]-[0022], [0026], examples | 1-13, 16-18, 20 |
| A | | 14, 15, 19 |
| A | JP 6966601 B1 (DAICEL CORP.) 17 November 2021 (2021-11-17) paragraph [0018] | 1-20 |
| A | JP 7-76632 A (DAICEL CHEM IND LTD.) 20 March 1995 (1995-03-20) entire text | 1-20 |
| A | JP 2004-277748 A (TOYO BOSEKI K.K.) 07 October 2004 (2004-10-07) entire text | 1-20 |
| A | JP 8-176501 A (TOYO BOSEKI K.K.) 09 July 1996 (1996-07-09) entire text | 1-20 |
| A | JP 2001-146570 A (TOYO BOSEKI K.K.) 29 May 2001 (2001-05-29) entire text | 1-20 |

[✓] Further documents are listed in the continuation of Box C.    [✓] See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **04 February 2022** | **15 February 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2021/043940**

### C. DOCUMENTS CONSIDERED TO BE RELEVANT

| Category* | Citation of document, with indication, where appropriate, of the relevant passages | Relevant to claim No. |
|---|---|---|
| A | JP 2004-18680 A (NEC CORP.) 22 January 2004 (2004-01-22)<br>entire text | 1-20 |

Form PCT/ISA/210 (second sheet) (January 2015)

**INTERNATIONAL SEARCH REPORT**
**Information on patent family members**

International application No.

**PCT/JP2021/043940**

| Patent document cited in search report | | | Publication date (day/month/year) | Patent family member(s) | | | Publication date (day/month/year) |
|---|---|---|---|---|---|---|---|
| JP | 2000-281805 | A | 10 October 2000 | (Family: none) | | | |
| JP | 6966601 | B1 | 17 November 2021 | (Family: none) | | | |
| JP | 7-76632 | A | 20 March 1995 | US full text | 5478386 | A | |
| | | | | EP | 597478 | A1 | |
| | | | | DE | 69316836 | C | |
| | | | | CA | 2102927 | A1 | |
| | | | | PH | 30463 | A | |
| | | | | KR | 10-1994-0011541 | A | |
| JP | 2004-277748 | A | 07 October 2004 | (Family: none) | | | |
| JP | 8-176501 | A | 09 July 1996 | (Family: none) | | | |
| JP | 2001-146570 | A | 29 May 2001 | US full text | 6395866 | B1 | |
| | | | | EP | 1072625 | A2 | |
| | | | | KR | 10-2001-0015443 | A | |
| | | | | CN | 1281868 | A | |
| JP | 2004-18680 | A | 22 January 2004 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TAKADA, H.** Current status of microplastics contamination --International trends and countermeasures. *Haikibutsu Shigen Junkan Gakkaishi,* 2018, vol. 29 (4), 261-269

- **EBISUI, A. et al.** et al.: "Decomposition of biodegradable plastics in seawater. *Suisan Kogaku,* 2003, vol. 40 (2), 143-149
- *Sen'i to Kogyo,* 1984, vol. 40 (4.5), 259-261
- *Journal of Network Polymer,* 2018, vol. 39 (1), 10-19